# EUROPEAN PATENT APPLICATION

(11) **EP 4 610 692 A1**
(43) Date of publication of application: **03.09.2025**
(21) Application number: 25160894.9
(22) Date of filing: 28.02.2025
(51) Int. Cl.: G01S 7/41, G01S 13/56, B60W 40/08, G01S 13/931

(54) **SEAT OCCUPANCY SENSOR SYSTEM FOR VEHICLES AND METHOD OF USING THE SAME**

(30) Priority: 28.02.2024 US 202418590628
(71) Applicant: Clarion Corporation of America, Auburn Hills, MI 48326 (US)
(72) Inventor: MILADI, Marouane, Nortville (US)
(74) Representative: Lavoix

(57) **Abstract**

A seat occupancy sensor system and method that use radio frequency (RF) sensors to detect and distinguish vehicle occupants in a passenger cabin of a vehicle. The system may include one or more seat occupancy sensor(s) and a seat occupancy control module and can operate according to different operational modes based on the state of the vehicle doors. When one or more door(s) are open, the system and method may operate according to a first operational mode that keeps track of vehicle occupants entering and/or exiting the passenger cabin; and when there are no doors open, the system and method may operate according to a second operational mode that detects and distinguishes vehicle occupants in the passenger cabin, with the occupant count from the first mode being used as an input. These different operational modes can help improve the accuracy and/or performance of seat occupancy sensor system.

## Description

### TECHNICAL FIELD

The present disclosure is related generally to sensor systems for vehicles, and more particularly, to seat occupancy sensor systems that use radio frequency (RF) sensors.

### BACKGROUND

Various types of sensors have been used in vehicles to determine the state of occupancy for front and/or rear seats. For instance, pressure sensors, capacitive sensors, and ultrasonic sensors have all been used, however, each of these different sensor types has certain drawbacks. Pressure and capacitive sensors can detect and distinguish seat occupancy, however, systems that use such sensors can be expensive since a separate sensor is required for each seat. A single ultrasonic sensor, on the other hand, can detect movements in and around multiple seats, but may not have the resolution to accurately distinguish between occupants, particularly when the occupants are sitting very close to one another or are sitting in a second or third row of the vehicle.

### SUMMARY

According to one aspect, there is provided an illustrative embodiment of a seat occupancy sensor system for a vehicle, comprising: at least one seat occupancy sensor configured to receive radio frequency (RF) signals within a passenger cabin of the vehicle; and a seat occupancy control module in communication with the seat occupancy sensor, wherein the seat occupancy control module is configured to operate the seat occupancy sensor system in first and second operational modes, when at least one vehicle door is open, the seat occupancy control module is configured to operate the seat occupancy sensor system according to the first operational mode which uses an occupant count to keep track of vehicle occupants entering and/or exiting the passenger cabin, and when no vehicle doors are open, the seat occupancy control module is configured to operate the seat occupancy sensor system according to the second operational mode which detects and distinguishes vehicle occupants in the passenger cabin, wherein the occupant count from the first operational mode is used as an input to the second operational mode.

According to another aspect, there is provided an illustrative embodiment of a method of using a seat occupancy sensor system for a vehicle, the system comprising at least one seat occupancy sensor configured to receive radio frequency (RF) signals within a passenger cabin of the vehicle and a seat occupancy control module in communication with the seat occupancy sensor, the method comprising the steps of: receiving a door status signal at the seat occupancy control module indicating a state of one or more vehicle door(s); selecting a first operational mode or a second operational mode with the seat occupancy control module based, at least partially, on the state of the vehicle door(s); when at least one vehicle door is open, operating the seat occupancy sensor system according to the first operational mode by using an occupant count to keep track of vehicle occupants entering and/or exiting the passenger cabin; and when no vehicle doors are open, operating the seat occupancy sensor system according to the second operational mode by detecting and distinguishing vehicle occupants in the passenger cabin, wherein the occupant count from the first operational mode is used as an input to the second operational mode.

It is contemplated that any number of the individual features of the above-described embodiments and of any other embodiments depicted in the drawings or description below can be combined in any combination to define an invention, except where features are incompatible.

### BRIEF DESCRIPTION OF THE DRAWINGS

Illustrative embodiments will hereinafter be described in conjunction with the following figures, wherein like numerals denote like elements, and wherein:
FIG. 1 is a schematic view showing an example of a seat occupancy sensor system installed within a passenger cabin of a vehicle;
FIG. 2 is a schematic block diagram of the seat occupancy sensor system of FIG. 1; and
FIG. 3 is a flowchart showing an example of a method of using a seat occupancy sensor system, such as the seat occupancy sensor system of FIG. 1.

### DESCRIPTION OF ILLUSTRATIVE EMBODIMENTS

Described herein are a seat occupancy sensor system and method that use radio frequency (RF) sensors to detect and distinguish vehicle occupants in a passenger cabin of a vehicle. The present system and method may be used with any type of vehicle, including any type of car, truck, sports utility vehicle (SUV), off road vehicle (ORV), cross over vehicle, commercial vehicle, etc., including those powered by traditional internal combustion engines, electric motors, or hybrid powertrains having both, to cite a few possibilities. The output of the present system and method can be provided to and used by any number of different vehicles systems and/or modules, such as seat belt warning systems, airbag deployment systems, collision avoidance systems, safety systems, infotainment systems, etc.

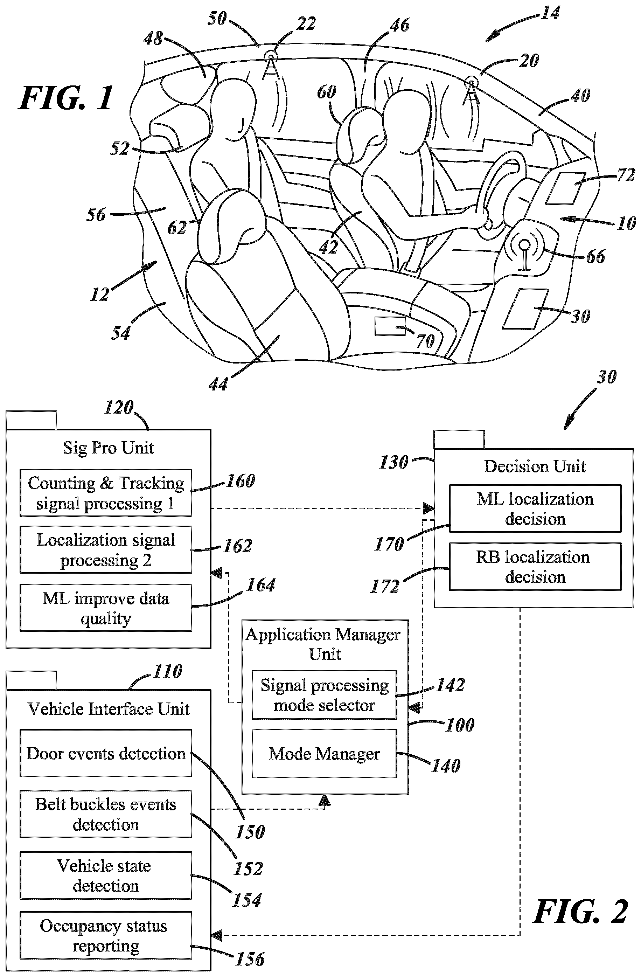

Turning now to FIG. 1, there is shown a schematic view of a seat occupancy sensor system 10 installed within a passenger cabin 12 of a vehicle 14. According to one example, the seat occupancy sensor system 10 is a multiple-input multiple-output (MIMO), frequency modulated continuous wave (FMCW), millimeter-wave radio detection and ranging (RADAR) system. Seat occupancy sensor system 10 may include one or more seat occupancy sensor(s) 20, 22 strategically mounted throughout the passenger cabin 12 and a seat occupancy control module 30 in communication with the sensor(s). The seat occupancy sensor system and method may strategically operate according to different operational modes based on the state or status of the vehicle doors. When one or more doors are open, the system and method may operate according to a first operational mode that uses RF signals to keep track of the vehicle occupants entering and/or exiting the passenger cabin; when there are no doors open (and possibly when the vehicle is being driven), the seat occupancy sensor system and method may operate according to a second operational mode that uses RF signals to detect and distinguish vehicle occupants in the passenger cabin, with the occupant count from the first mode being used as an input to the second mode. These different operational modes can help improve the accuracy and/or performance of seat occupancy sensor system 10, particularly when occupants are sitting very close to one another, when occupants are sitting in a second or third row, when occupants are sitting in a middle seat, and/or when occupants are leaning or extending into an adjacent seat, all of which can make accurate occupant sensing difficult.

Seat occupancy sensors 20, 22 are mounted at strategic locations within passenger cabin 12 and use radio frequency (RF) signals to detect objects and/or movements within the cabin. For instance, seat occupancy sensor 20 may be mounted on or near an A-pillar 40 or a roof panel 50 and directed towards a front driver's seat 42 and/or a front passenger's seat 44 in order to detect objects and/or movements in the spaces associated with those seats. If object movement is detected by sensor 20, then seat occupancy sensor system 10 may conclude that a vehicle occupant is sitting in one or both of the front seats. Seat occupancy sensor 22, on the other hand, may be mounted on or near a B-pillar 46, a C-pillar 48 or a roof panel 50 and can be oriented towards a second row in order to sense any occupants seated in a rear driver's seat 52, a rear passenger's seat 54 and/or a rear middle seat 56. Accordingly, a single seat occupancy sensor 20, 22 can be used to detect and distinguish multiple occupants. It should be pointed out that any number and/or arrangement of seat occupancy sensors may be used, as the present system and method are not limited to the exemplary embodiment schematically illustrated in FIG. 1. For instance, fewer than two seat occupancy sensors could be used or additional sensors may be employed - instead of sensors 20, 22 only being mounted on the driver's side, sensors could be mounted on both the driver's and passenger's sides (e.g., a total of four sensors); instead of there only being two rows, the vehicle could have three rows with one or two sensors per row (e.g., a total of three or six sensors); or there could be one or more center mounted sensors installed in a dashboard, in a rear view mirror assembly, in a dome light, in a roof panel, etc., in addition to or in lieu of sensors 20, 22 mounted on the side. Rather than the seat occupancy sensors all being mounted along a perimeter of the passenger cabin 12, as shown, it is possible for one or more sensors to be mounted in an interior of the passenger cabin, such as in the backside of head rests 60, 62 or by a rear window. The previous examples only represent some of the possible sensor arrangements that could be employed by the present system and method, as others could be used as well.

Seat occupancy sensors 20, 22 can be active sensors that actively emit electromagnetic signals in the RF frequency range (about 20 KHz - 300 GHz), receive reflected signals that bounce off various objects, and analyze the reflected signals according to radio detection and ranging (RADAR) techniques in order to determine the presence of occupants in the various seats. Seat occupancy sensors 20, 22 that are active RADAR sensors may include a transmitter, receiver and antenna all integrated in the same unit or device and are sometimes referred to as monostatic RADAR devices. It is possible for seat occupancy sensors 20, 22 to be configurable such that the present system and method (e.g., the seat occupancy control module 30) can control or adjust certain settings like range resolution, velocity resolution and/or angular resolution, as will be explained later in greater detail.

In different embodiments, the seat occupancy sensors 20, 22 may be passive RADAR sensors that do not actively emit RF signals but instead passively listen for reflected RF signals that were emitted by a different source. For example, seat occupancy sensors 20, 22 could listen for reflected WiFi signals (2-5 GHz), Bluetooth signals (2.4 GHz) and/or other RF signals that are already present within the passenger cabin 12. If vehicle 14 has an infotainment system 66 that is already transmitting RF signals throughout the passenger cabin 12 (e.g., at a frequency of around 5 GHz), then seat occupancy sensors 20, 22 could be arranged and configured to passively listen for and analyze reflected signals or echoes of these signals in order to determine the presence of occupants in the different seats; this would constitute a passive sensor system. Passive sensor systems that have a transmitter and receiver in different locations are sometimes called bistatic RADAR devices. It is also possible for seat occupancy sensor system 10 to include a combination of active and passive RADAR or RF sensors, as well as other types of sensors.

Seat occupancy control module 30 is an electronic module that is in communication with sensors 20, 22 and can be designed to control or manage certain aspects of their operation. Modern vehicles typically have a large and diverse collection of such electronic modules, the exact makeup of which depends on the nature and sophistication of the vehicle. Electronic modules, also referred to as electronic control units, electronic controllers or just controllers, have embedded software for carrying out their prescribed tasks or functions and are connected to numerous other electronic devices throughout the vehicle via some type of wired or wireless internal communications network (e.g., a vehicle bus). Vehicle 14 may include any suitable combination or arrangement of electronic modules and/or communications networks and is not limited to the specific embodiment schematically illustrated in FIG. 1 or described herein, which may include a body control module 70, a seat belt warning system 72, as well as any suitable combination of other components, devices, units, modules, controllers and/or systems that are known in the art. The modules and systems described herein may be stand alone units or they may be integrated or combined with other modules and systems. According to one non-limiting example, the seat occupancy control module 30 includes an application manager unit 100, a vehicle interface unit 110, a signal processing unit 120 and a decision unit 130, as shown in FIG. 2 and described further below. It should be noted that one or more seat occupancy control module(s) 30 may be integrated or combined with one or more seat occupancy sensor(s) 20, 22 (e.g., where each sensor has its own integrated control module) or they may be separate units.

Body control module (BCM) 70 is configured to monitor and control certain functions related to the vehicle body, such as doors, door locks, windows, lights, etc. According to one embodiment, the BCM 70 is connected to the seat occupancy control module 30 via an internal communications network, like a vehicle bus, and monitors and reports the status of each of the vehicle's doors. That is, the BCM 70 may receive signals from one or more door sensors operably coupled to each door and determine if each door is opened or closed. BCM 70 can then provide seat occupancy control module 30 with a door status signal that indicates the state or status of one or more of the vehicle door(s), thereby indicating if such door(s) are opened or closed. It is not required that the BCM 70 send the door status signal, as the door sensors can monitor the status of the different vehicle doors and can be connected (directly or indirectly) to the internal communications network in order to provide the present system and method with the door status signal or the like.

Seat belt warning system 72 is configured to monitor and control certain safety functions, such as those related to seat belts and their status. In one example, the seat belt warning system 72 generates alerts or warnings to the driver or other vehicle occupants, as well as to other modules and/or systems in the vehicle. If, for example, one or more vehicle occupants are detected but are not wearing their seat belt, then the seat belt warning system 72 may generate an audible and/or visual warning requesting that the occupant put their seat belt on or it could send a seat belt status signal to other systems within the vehicle, such as an airbag deployment system, indicating the seatbelt status of the occupant.

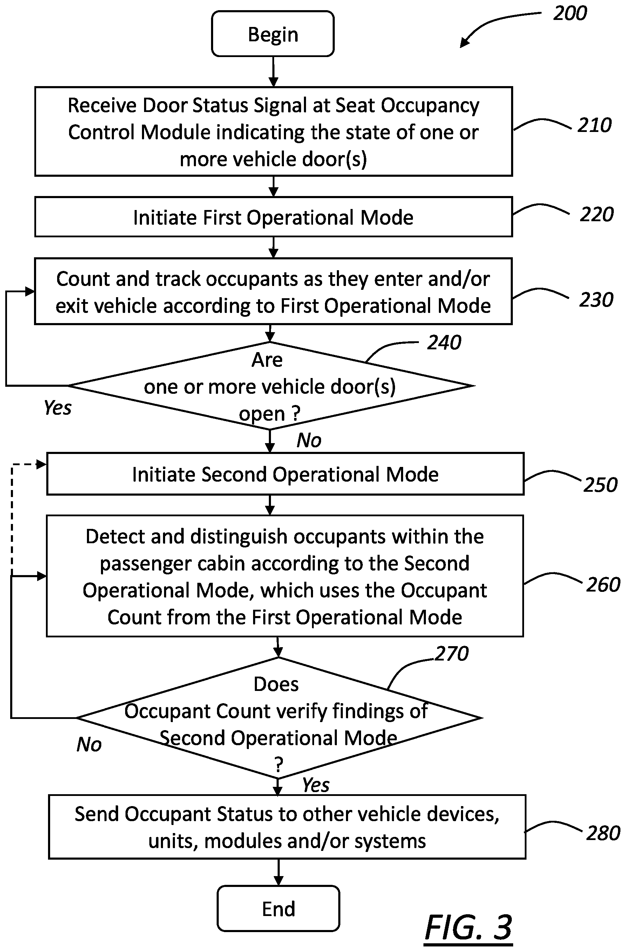

With reference to FIGS. 2 and 3, there are shown a schematic block diagram of the seat occupancy control module 30 and a method 200 for using the seat occupancy sensor system 10. Method 200 may begin at different times, including when triggered by one of several trigger events, step 210, such as a vehicle door being opened. For example, when a vehicle door is opened, the body control module (BCM) 70 or some other electronic module or device may send a door status signal to the seat occupancy control module 30 indicating that a vehicle door has been opened. The seat occupancy control module 30 may include a vehicle interface unit 110 with a door event detection application 150 that receives and processes the door status signal, after which it can send a corresponding signal to the application manager unit 100. The vehicle interface unit 110 may also include a belt buckles events detection application 152, a vehicle state detection application 154 and/or an occupancy status reporting application 156.

In response to a vehicle door being opened, the method may initiate a first operational mode that tracks and counts the number of occupants entering and/or exiting the passenger cabin, step 220. Keeping track of the occupants in the vehicle can improve the accuracy of the present system and method, as it provides a useful data point. In order to accurately track and count occupants as they enter and/or exit the vehicle, step 220 may need to modify or adjust certain settings of the seat occupancy sensors 20, 22, such as their range resolution, velocity resolution and/or angular resolution. Skilled artisans will appreciate that optimizing certain settings of RADAR or RF sensors will improve some performance characteristics, while negatively impacting others. Since the first operational mode is designed to track and count occupants as they are entering and/or exiting the vehicle (i.e., moving targets), it may be advantageous for the first operational mode to optimize the velocity resolution of the seat occupancy sensors 20, 22. Increasing the velocity resolution of the sensors enables the first operational mode to better distinguish between moving targets based on their movements and/or speed, thereby improving the accuracy of the occupant count as people enter and/or exit the vehicle. This optimization of the velocity resolution, however, does not come without tradeoffs, as the range and/or angular resolution of the seat occupancy sensors 20, 22 may be somewhat impacted. The seat occupancy control module 30 may include an application manager unit 100 with a mode manager application 140 that selects an appropriate operational mode based on inputs from the vehicle interface unit 110 and a signal processing mode selector application 142 that adjusts or makes changes to certain parameters based on the selected operational mode, as will be explained.

Potential ways for step 220 to increase the velocity resolution during the first operational mode include adjusting the configuration of chirp parameters and/or implementing signal processing techniques used with the seat occupancy sensors 20, 22. The term "chirp" or "chirp signal," as used herein, broadly includes any RADAR or RF signals in which the frequency increases (an "up-chirp") or decreases (a "down-chirp") over time. The chirp start frequency is the frequency at which that the chirp starts, the chirp end frequency is the frequency at which the chirp ends, the chirp bandwidth is the range of frequencies of the chirp signal (typically the frequency delta between the chirp start and end frequencies), the chirp duration is the time duration of the chirp signal (typically the time delta between the chirp start and end frequencies), and the chirp rate is the rate at which the chirp frequencies change (typically the chirp bandwidth / chirp duration). Increasing the chirp duration in the first operational mode (for example, increasing to about 10-100 µs) can allow for finer resolution of Doppler frequencies, which in turn increases the accuracy or precision of velocity measurements involving moving targets. Furthermore, providing stable chirp generation helps ensure that the chirp signal is stable over the chirp duration, as instability in the chirp signal can decrease the accuracy of Doppler measurements and, thus, decrease the accuracy of velocity measurements involving moving targets, like occupants entering and/or exiting the vehicle.

The preceding examples illustrate different ways in which the first operational mode can increase velocity resolution by manipulating different chirp parameters, however, the first operational mode can also improve velocity resolution by implementing different signal processing techniques. For instance, step 220 can improve the velocity resolution of seat occupancy sensors 20, 22 by performing fast Fourier transforms (FFTs) on the reflected RADAR or RF signals or echoes to better identify Doppler frequency shifts corresponding to velocity measurements of moving targets. Another signal processing technique that can be optimized by the first operational mode of step 220 involves the FFT size. Increasing the FFT size allows for finer frequency resolution in the Doppler domain, which in turn results in better velocity resolution. Yet another possible signal processing technique that may be optimized in step 220 pertains to the application of windowing functions (e.g., Hamming, Hanning or Blackman windows) in Doppler processing in order to reduce spectral leakage. The aforementioned examples are signal processing techniques that may be employed by the present system and method in order to enhance or improve the velocity resolution of the system during the first operational mode when occupants are most likely to be entering and/or exiting the vehicle. Other signal processing techniques may be used as well. The selection of an operational mode and/or the optimization in velocity resolution that occurs in step 220 may be implemented by command signals sent from the application manager unit 100, such as the mode manager application 140 and/or the signal processing mode selector application 142, to the signal processing unit 120, for example the counting & tracking signal processing 1 application 160 or the ML improve data quality application 164. It is also possible for selection of an operational mode and/or optimization in velocity resolution to take place within and/or by the sensors 20, 22.

Now that one or more adjustments or modifications to the chirp parameters and/or signal processing techniques have been made to improve the velocity resolution of the seat occupancy sensors 20, 22, step 230 counts and tracks occupants entering and/or exiting the vehicle according to the first operational mode. Counting and tracking occupants may be carried out in any number of different ways, all of which use an occupant count of some sort. For example, step 230 may simply monitor all of the vehicle doors, keep track of the total number of occupants in vehicle 14 at any given time, and provide a corresponding occupant count that is representative of the total number of occupants in the vehicle; it may monitor all or some of the vehicle doors, keep track of the total number of occupants in each row of the vehicle, and provide one or more occupant count(s) that are each representative of the total number of occupants in each row; it may monitor certain vehicle doors, keep track of the occupants in each seat, and provide one or more occupant count(s) that are each representative of the seats that are believed to be occupied; or it may use some combination of the aforementioned examples or other examples and provide multiple occupant counts (e.g., an occupant count for the total number of occupants in the vehicle, as well as occupant counts for each row and/or seat). The occupant counts may be total values, net values, probability values, binary values, or some other type of value or amount. Each of these occupant counts can be a useful data point to the second operational mode and can provide clues as to the actual occupant seating situation, as will be subsequently explained.

So long as one or more vehicle doors remain open, the method may continue to keep track of occupants entering and/or exiting the vehicle, step 240. The door status signal provided by the body control module (BCM) 70 or some other sensor, device and/or module may be used by step 240 to make this determination. Depending on the embodiment, step 240 may also use other factors or inputs for determining when to advance. For instance, step 240 may confirm that the vehicle is in "drive" or is moving, in addition to all of the vehicle doors being closed, before advancing to the next step. The seat occupancy control module 30 may utilize the door events detection application 150 and/or a vehicle state detection application 154 in the vehicle interface unit 110 to make the determination(s) in step 240 and to send a corresponding signal to the application manager unit 100.

Next, step 250 initiates a second operational mode that detects and distinguishes vehicle occupants in the passenger cabin and uses the occupant count from the first operational mode as an input. Step 220 may need to modify or adjust certain settings of the seat occupancy sensors 20, 22, such as their range resolution, velocity resolution and/or angular resolution, in order to generate accurate results. Previously, the method optimized the velocity resolution of the system in the first operational mode in order to better detect occupants entering and/or exiting the vehicle (i.e., moving targets). Now that all of the vehicle doors are shut and vehicle 14 is being driven, it is assumed that the occupants are largely stationary or moving minimally in each of their seats, but they may be seated very close to one another. In these conditions, velocity resolution is not as critical to the performance of the seat occupancy sensor system 10 as range resolution and/or angular resolution. Thus, step 250 may increase the range resolution and/or angular resolution during the second operational mode by adjusting the chirp parameters and/or signal processing techniques associated with seat occupancy sensors 20, 22.

In one example, step 250 increases or optimizes the range resolution by increasing the chirp bandwidth (sometimes called the "sweep bandwidth") of the RF signals. Skilled artisans will appreciate that the range resolution of most FMCW radar systems is proportional to the chirp bandwidth; thus, increasing the chirp bandwidth will likely increase the range resolution of the system, which can be important during the second operational mode when occupants are typically stationary and may be seated close together. If the range resolution is not sufficiently high, then two closely seated occupants could mistakenly be interpreted as a single target. In another example, step 250 may increase the range resolution by increasing the chirp rate to ensure that the seat occupancy sensor system 30 can effectively process the wider chirp bandwidth (e.g., by increasing the frequency slope of the chirp). In terms of optimizing angular resolution through the manipulation of chirp parameters, step 250 may ensure stable and consistent chirp generation (e.g., frequency stability, phase stability, amplitude stability, frequency modulation linearity time, etc.), as this can positively impact the quality of the data used during signal processing algorithms, such as those associated with beam forming.

The preceding examples illustrate different ways in which the second operational mode can increase range and/or angular resolution by manipulating different chirp parameters, however, the second operational mode can also improve range and/or angular resolution by implementing different signal processing techniques. For example, step 250 can improve the range resolution of seat occupancy sensors 20, 22 by implementing pulse compression techniques to better utilize the increased chirp bandwidth, as pulse compression typically improves the signal-to-noise ratio (SNR) of the received RF signals. This, in turn, allows for better discrimination of targets in terms of range, which can be useful when trying to discriminate between different occupants who are sitting very close to one another. Step 250 may also apply windowing functions (e.g., Hamming, Hanning or Blackman windows) to the received RF signals before performing the FFT, as doing so can reduce sidelobes and improve resolution. Another example of a signal processing technique that may be utilized in step 250 to optimize range resolution involves manipulation of the size of the FFT. Using a larger FFT size during range processing can provide for finer resolution in the frequency domain, which in turn results in greater range resolution.

There are also signal processing techniques that may be implemented or applied in step 250 to optimize angular resolution which, in turn, can provide a more accurate spatial representation of the passenger cabin and allow for improved localization and/or identification of occupants. One such signal processing technique is digital beamforming, which can be well suited for detecting and/or distinguishing slow moving or stationary targets (e.g., occupants sitting in seats) that are seated close together or may have an arm or leg draped over into an adjacent seat. Digital beamforming, particularly in the context of a MIMO FMCW millimeter-wave RADAR system, involves the use of multiple transmitting antennas and multiple receiving antennas (e.g., seat occupancy sensors 20, 22, as well as others) that are focused in a certain direction (e.g., azimuth and/or elevation directions). Implementing beamforming techniques in step 250 can help enable the present system and method to precisely control beam direction and to enhance angular resolution. In one example, step 250 uses digital beamforming techniques to focus or direct the seat occupancy sensors 20, 22 towards areas or spaces within the passenger cabin that correspond to specific seats (the system has knowledge about the interior layout or geometry of the passenger cabin). A single seat occupancy sensor 20, 22 can potentially monitor multiple seats, with the sensor being directed at a boundary between adjacent seats being monitored, at the center of a particular seat being monitored, or at a different target. Other beamforming and/or signal processing techniques may certainly be applied and implemented as well.

The aforementioned examples are signal processing techniques that may be employed by the present system and method in order to enhance or improve the range and/or angular resolution of the system during the second operational mode when occupants are most likely sitting in different seats in the passenger cabin. Other signal processing techniques may be used as well. The selection of an operational mode and/or the optimization in range and/or angular resolution that occurs in step 250 may be implemented by command signals sent from the application manager unit 100, such as the mode manager application 140 and/or the signal processing mode selector application 142, to the signal processing unit 120.

Step 260 then detects and distinguishes occupants in the passenger cabin according to the second operational mode, sometimes referred to as a "localization mode." According to one example, the seat occupancy sensors 20, 22 use RF or RADAR signals to evaluate moving points, also referred to as cloud points, located in a certain three-dimensional (3D) space which corresponds to one or more passenger seat(s) within the passenger cabin. When the number of cloud points for a certain 3D space exceeds a certain threshold, the seat occupancy sensor system and method may determine that the corresponding passenger seat is occupied. As explained above, the second operational mode or localization mode is designed to optimize the range and/or angular resolution of the system when all of the vehicle doors are closed and the occupants are presumably seated in their seats (e.g., when the vehicle is being driven). This optimization, which can come at the cost of velocity resolution, improves the accuracy of the localization mode in step 260, however, it can still be difficult to discern one closely seated occupant from another, particularly if the occupant(s) are not moving much.

Thus, step 260 takes into account and/or otherwise considers the occupant count from the first operational mode as an input to the second operational mode. In one example, step 260 first determines the number and location of occupants in the cabin according to the second operational mode and then verifies that information with the occupant count from the first operational mode. If the occupant count -- whether it be on a vehicle basis, a row basis and/or a seat basis -- verifies or confirms the findings from the localization mode, then step 270 may conclude that the method has accurately detected and distinguished one or more vehicle occupant(s) in the passenger cabin and will send control to step 280. If, on the other hand, the occupant count does not confirm the findings of the localization mode (e.g., if it indicates a different number of occupants on a vehicle basis, row basis and/or seat basis), then step 270 may send control back to step 260 to repeat that step with the same parameters and techniques of the second operational mode that were previously used. In a different example of when the occupant count is inconsistent with the findings of the localization mode, step 270 may send control of the method back to step 250 so that some of the parameters and/or techniques of the second operational mode can be modified or adjusted, before proceeding to step 260 to repeat that step. The collaborative use of the first and second operational modes together can have the desirable effect of reducing false detections or false positives (i.e., sensing an occupant when one is not really present), as well as reducing misdetections or false negatives (i.e., not sensing an occupant when one actually is present). The preceding examples are only some of the possibilities of how the occupant count from the first operational mode may be used as an input to the second operational mode, as other examples are certainly possible. The occupant detection and distinction, as well as the corroboration of the outputs of the two different operating modes that occurs in step 260, may be carried out by the signal processing unit 120 (e.g., the localization signal processing application 162) and/or the decision unit 130 (e.g., the ML localization decision application 170 and/or RB localization decision application 172). It is even possible for one or more units within the seat occupancy control module 30 to use machine learning and/or artificial intelligence (AI) powered algorithms, rule-based algorithms and/or a combination of both to carry out these steps. Output from these applications may be provided back to the application manager unit 100 and/or the vehicle interface unit 110, for example.

Once the outputs of the first and second operational modes confirm or corroborate one another, the method advances to step 280 and sends an occupant status to one or more devices, units, modules and/or systems in the vehicle. The occupant status output, according to one example, represents the occupancy status for each seat in the vehicle (e.g., a binary indication (yes/no) of occupancy for each seat, a probability indication of occupancy for each seat, or some other type of occupancy indication) and can be sent to any number of different destinations within and/or outside of the vehicle, such as seat belt warning systems, airbag deployment systems, collision avoidance systems, safety systems, infotainment systems, etc. The present system and method are not limited to how the occupant status output may be used.

In a different embodiment, method 200 could be modified such that the counting and tracking of occupants according to the first operational mode (steps 220, 230) and/or the detecting and distinguishing of occupants according to the second operational mode (steps 250, 260) could be performed each time a seat belt status changed for one or more occupant(s). This could be the case even when the vehicle doors remain closed and/or remain open, as the seat belt status change could function as the trigger event.

It is to be understood that the foregoing is a description of one or more embodiments of the invention. The invention is not limited to the particular embodiment(s) disclosed herein, but rather is defined solely by the claims below. Furthermore, the statements contained in the foregoing description relate to particular embodiments and are not to be construed as limitations on the scope of the invention or on the definition of terms used in the claims, except where a term or phrase is expressly defined above. Various other embodiments and various changes and modifications to the disclosed embodiment(s) will become apparent to those skilled in the art. All such other embodiments, changes, and modifications are intended to come within the scope of the appended claims.

As used in this specification and claims, the terms "e.g.," "for example," "for instance," "such as," and "like," and the verbs "comprising," "having," "including," and their other verb forms, when used in conjunction with a listing of one or more components or other items, are each to be construed as open-ended, meaning that the listing is not to be considered as excluding other, additional components or items. Other terms are to be construed using their broadest reasonable meaning unless they are used in a context that requires a different interpretation. In addition, the term "and/or" is to be construed as an inclusive OR. Therefore, for example, the phrase "A, B, and/or C" is to be interpreted as covering all the following: "A"; "B"; "C"; "A and B"; "A and C"; "B and C"; and "A, B, and C."

The present invention also relates to the following embodiments:
Embodiment 1: A seat occupancy sensor system for a vehicle, comprising:
   at least one seat occupancy sensor configured to receive radio frequency (RF) signals within a passenger cabin of the vehicle; and
   a seat occupancy control module in communication with the seat occupancy sensor, wherein the seat occupancy control module is configured to operate the seat occupancy sensor system in first and second operational modes,
      when at least one vehicle door is open, the seat occupancy control module is configured to operate the seat occupancy sensor system according to the first operational mode which uses an occupant count to keep track of vehicle occupants entering and/or exiting the passenger cabin, and
      when no vehicle doors are open, the seat occupancy control module is configured to operate the seat occupancy sensor system according to the second operational mode which detects and distinguishes vehicle occupants in the passenger cabin, wherein the occupant count from the first operational mode is used as an input to the second operational mode.
Embodiment 2: The seat occupancy sensor system of embodiment 1, wherein the seat occupancy control module is configured to receive a door status signal that indicates a state of one or more vehicle door(s) and to select between the first and second operational modes based, at least partially, on the state of the vehicle door(s).
Embodiment 3: The seat occupancy sensor system of embodiment 1, wherein the at least one seat occupancy sensor is a configurable RADAR sensor with one or more setting(s) that can be used to adjust range resolution, velocity resolution and/or angular resolution, and the seat occupancy control module is configured to adjust the setting(s) of the seat occupancy sensor based on the operational mode.
Embodiment 4: The seat occupancy sensor system of embodiment 3, wherein, during the first operational mode when at least one vehicle door is open, the seat occupancy control module is configured to increase a velocity resolution of the seat occupancy sensor by adjusting one or more chirp parameter(s) and/or implementing one or more signal processing technique(s) in order to accurately keep track of the vehicle occupants entering and/or exiting the passenger cabin.
Embodiment 5: The seat occupancy sensor system of embodiment 4, wherein, during the first operational mode when at least one vehicle door is open, the seat occupancy control module is configured to adjust the one or more chirp parameter(s) by increasing a chirp duration to improve the accuracy of velocity measurements pertaining to the vehicle occupants entering and/or exiting the passenger cabin.
Embodiment 6: The seat occupancy sensor system of embodiment 4, wherein, during the first operational mode when at least one vehicle door is open, the seat occupancy control module is configured to implement one or more of the following signal processing parameter(s): increasing a fast Fourier transform (FFT) size and/or applying a windowing function to improve the accuracy of velocity measurements pertaining to the vehicle occupants entering and/or exiting the passenger cabin.
Embodiment 7: The seat occupancy sensor system of embodiment 3, wherein, during the second operational mode when no vehicle doors are open, the seat occupancy control module is configured to increase a range resolution and/or an angular resolution of the seat occupancy sensor by adjusting one or more chirp parameter(s) and/or implementing one or more signal processing technique(s) in order to accurately detect and distinguish vehicle occupants in the passenger cabin.
Embodiment 8: The seat occupancy sensor system of embodiment 7, wherein, during the second operational mode when no vehicle doors are open, the seat occupancy control module is configured to adjust the one or more chirp parameter(s) by increasing a chirp bandwidth and/or a chirp rate to improve the accuracy of range measurements pertaining to seated vehicle occupants in the passenger cabin.
Embodiment 9: The seat occupancy sensor system of embodiment 7, wherein, during the second operational mode when no vehicle doors are open, the seat occupancy control module is configured to implement one or more of the following signal processing technique(s): applying pulse compression techniques to better utilize a chirp bandwidth, increasing a fast Fourier transform (FFT) size and/or applying a windowing function to improve the accuracy of range measurements pertaining to seated vehicle occupants in the passenger cabin.
Embodiment 10: The seat occupancy sensor system of embodiment 7, wherein, during the second operational mode when no vehicle doors are open, the seat occupancy control module is configured to implement the following signal processing technique: digital beamforming to improve the accuracy of angular measurements pertaining to seated vehicle occupants in the passenger cabin.
Embodiment 11: The seat occupancy sensor system of embodiment 1, wherein the seat occupancy control module is configured to use the occupant count from the first operational mode to verify the results of the second operational mode, and to again detect and distinguish vehicle occupants in the passenger cabin when the occupant count is inconsistent with the results of the second operational mode.
Embodiment 12: A method of using a seat occupancy sensor system for a vehicle, the system comprising at least one seat occupancy sensor configured to receive radio frequency (RF) signals within a passenger cabin of the vehicle and a seat occupancy control module in communication with the seat occupancy sensor, the method comprising the steps of:
   receiving a door status signal at the seat occupancy control module indicating a state of one or more vehicle door(s);
   selecting a first operational mode or a second operational mode with the seat occupancy control module based, at least partially, on the state of the vehicle door(s);
   when at least one vehicle door is open, operating the seat occupancy sensor system according to the first operational mode by using an occupant count to keep track of vehicle occupants entering and/or exiting the passenger cabin; and
   when no vehicle doors are open, operating the seat occupancy sensor system according to the second operational mode by detecting and distinguishing vehicle occupants in the passenger cabin, wherein the occupant count from the first operational mode is used as an input to the second operational mode.
Embodiment 13: The method of embodiment 12, wherein, during the first operational mode when at least one vehicle door is open, the seat occupancy control module increases a velocity resolution of the seat occupancy sensor by adjusting one or more chirp parameter(s) and/or implementing one or more signal processing technique(s) in order to accurately keep track of the vehicle occupants entering and/or exiting the passenger cabin.
Embodiment 14: The method of embodiment 13, wherein, during the first operational mode when at least one vehicle door is open, the seat occupancy control module adjusts one or more chirp parameter(s) by increasing a chirp duration to improve the accuracy of velocity measurements pertaining to the vehicle occupants entering and/or exiting the passenger cabin.
Embodiment 15: The method of embodiment 13, wherein, during the first operational mode when at least one vehicle door is open, the seat occupancy control module implements one or more of the following signal processing technique(s): increasing a fast Fourier transform (FFT) size and/or applying a windowing function to improve the accuracy of velocity measurements pertaining to the vehicle occupants entering and/or exiting the passenger cabin.
Embodiment 16: The method of embodiment 12, wherein, during the second operational mode when no vehicle doors are open, the seat occupancy control module increases a range resolution and/or an angular resolution of the seat occupancy sensor by adjusting one or more chirp parameter(s) and/or implementing one or more signal processing technique(s) in order to accurately detect and distinguish vehicle occupants in the passenger cabin.
Embodiment 17: The method of embodiment 16, wherein, during the second operational mode when no vehicle doors are open, the seat occupancy control module adjusts one or more chirp parameter(s) by increasing a chirp bandwidth and/or a chirp rate to improve the accuracy of range measurements pertaining to seated vehicle occupants in the passenger cabin.
Embodiment 18: The method of embodiment 16, wherein, during the second operational mode when no vehicle doors are open, the seat occupancy control module implements one or more of the following signal processing technique(s): applying pulse compression techniques to better utilize a chirp bandwidth, increasing a fast Fourier transform (FFT) size, and/or applying a windowing function to improve the accuracy of range measurements pertaining to seated vehicle occupants in the passenger cabin.
Embodiment 19: The method of embodiment 16, wherein, during the second operational mode when no vehicle doors are open, the seat occupancy control module implements the following signal processing technique: digital beamforming to improve the accuracy of angular measurements pertaining to seated vehicle occupants in the passenger cabin.
Embodiment 20: The method of embodiment 12, wherein the seat occupancy control module uses the occupant count from the first operational mode to verify the results of the second operational mode, and repeats the detecting and distinguishing steps when the occupant count is inconsistent with the results of the second operational mode.

## Claims

1. A seat occupancy sensor system for a vehicle, comprising:
at least one seat occupancy sensor configured to receive radio frequency (RF) signals within a passenger cabin of the vehicle; and
a seat occupancy control module in communication with the seat occupancy sensor, wherein the seat occupancy control module is configured to operate the seat occupancy sensor system in first and second operational modes,
when at least one vehicle door is open, the seat occupancy control module is configured to operate the seat occupancy sensor system according to the first operational mode which uses an occupant count to keep track of vehicle occupants entering and/or exiting the passenger cabin, and
when no vehicle doors are open, the seat occupancy control module is configured to operate the seat occupancy sensor system according to the second operational mode which detects and distinguishes vehicle occupants in the passenger cabin, wherein the occupant count from the first operational mode is used as an input to the second operational mode.

2. The seat occupancy sensor system of claim 1, wherein the seat occupancy control module is configured to receive a door status signal that indicates a state of one or more vehicle door(s) and to select between the first and second operational modes based, at least partially, on the state of the vehicle door(s).

3. The seat occupancy sensor system of claim 1 or 2, wherein the at least one seat occupancy sensor is a configurable RADAR sensor with one or more setting(s) that can be used to adjust range resolution, velocity resolution and/or angular resolution, and the seat occupancy control module is configured to adjust the setting(s) of the seat occupancy sensor based on the operational mode.

4. The seat occupancy sensor system of claim 3, wherein, during the first operational mode when at least one vehicle door is open, the seat occupancy control module is configured to increase a velocity resolution of the seat occupancy sensor by adjusting one or more chirp parameter(s) and/or implementing one or more signal processing technique(s) in order to accurately keep track of the vehicle occupants entering and/or exiting the passenger cabin.

5. The seat occupancy sensor system of claim 4, wherein, during the first operational mode when at least one vehicle door is open, the seat occupancy control module is configured to:
adjust the one or more chirp parameter(s) by increasing a chirp duration to improve the accuracy of velocity measurements pertaining to the vehicle occupants entering and/or exiting the passenger cabin and/or
implement one or more of the following signal processing parameter(s):
increasing a fast Fourier transform (FFT) size; and/or
applying a windowing function to improve the accuracy of velocity measurements pertaining to the vehicle occupants entering and/or exiting the passenger cabin.

6. The seat occupancy sensor system of any one of claims 3 to 5, wherein during the second operational mode when no vehicle doors are open, the seat occupancy control module is configured to:
increase a range resolution and/or an angular resolution of the seat occupancy sensor by adjusting one or more chirp parameter(s) and/or implementing one or more signal processing technique(s) in order to accurately detect and distinguish vehicle occupants in the passenger cabin; and, optionally,
adjust the one or more chirp parameter(s) by increasing a chirp bandwidth and/or a chirp rate to improve the accuracy of range measurements pertaining to seated vehicle occupants in the passenger cabin.

7. The seat occupancy sensor system of claim 6, wherein, during the second operational mode when no vehicle doors are open, the seat occupancy control module is configured to:
implement one or more of the following signal processing technique(s): applying pulse compression techniques to better utilize a chirp bandwidth, increasing a fast Fourier transform (FFT) size and/or applying a windowing function to improve the accuracy of range measurements pertaining to seated vehicle occupants in the passenger cabin; and/or
implement the following signal processing technique: digital beamforming to improve the accuracy of angular measurements pertaining to seated vehicle occupants in the passenger cabin.

8. The seat occupancy sensor system of any one of claims 1 to 7, wherein the seat occupancy control module is configured to use the occupant count from the first operational mode to verify the results of the second operational mode, and to again detect and distinguish vehicle occupants in the passenger cabin when the occupant count is inconsistent with the results of the second operational mode.

9. A method of using a seat occupancy sensor system for a vehicle, the system comprising at least one seat occupancy sensor configured to receive radio frequency (RF) signals within a passenger cabin of the vehicle and a seat occupancy control module in communication with the seat occupancy sensor, the method comprising the steps of:
receiving a door status signal at the seat occupancy control module indicating a state of one or more vehicle door(s);
selecting a first operational mode or a second operational mode with the seat occupancy control module based, at least partially, on the state of the vehicle door(s);
when at least one vehicle door is open, operating the seat occupancy sensor system according to the first operational mode by using an occupant count to keep track of vehicle occupants entering and/or exiting the passenger cabin; and
when no vehicle doors are open, operating the seat occupancy sensor system according to the second operational mode by detecting and distinguishing vehicle occupants in the passenger cabin, wherein the occupant count from the first operational mode is used as an input to the second operational mode.

10. The method of claim 9, wherein, during the first operational mode when at least one vehicle door is open, the seat occupancy control module increases a velocity resolution of the seat occupancy sensor by adjusting one or more chirp parameter(s) and/or implementing one or more signal processing technique(s) in order to accurately keep track of the vehicle occupants entering and/or exiting the passenger cabin.

11. The method of claim 10, wherein, during the first operational mode when at least one vehicle door is open, the seat occupancy control module:
adjusts one or more chirp parameter(s) by increasing a chirp duration to improve the accuracy of velocity measurements pertaining to the vehicle occupants entering and/or exiting the passenger cabin; and/or
implements one or more of the following signal processing technique(s): increasing a fast Fourier transform (FFT) size and/or applying a windowing function to improve the accuracy of velocity measurements pertaining to the vehicle occupants entering and/or exiting the passenger cabin.

12. The method of any one of claims 9 to 11, wherein, during the second operational mode when no vehicle doors are open, the seat occupancy control module increases a range resolution and/or an angular resolution of the seat occupancy sensor by adjusting one or more chirp parameter(s) and/or implementing one or more signal processing technique(s) in order to accurately detect and distinguish vehicle occupants in the passenger cabin.

13. The method of claim 12, wherein, during the second operational mode when no vehicle doors are open, the seat occupancy control module:
adjusts one or more chirp parameter(s) by increasing a chirp bandwidth and/or a chirp rate to improve the accuracy of range measurements pertaining to seated vehicle occupants in the passenger cabin; and/or
implements one or more of the following signal processing technique(s): applying pulse compression techniques to better utilize a chirp bandwidth, increasing a fast Fourier transform (FFT) size, and/or applying a windowing function to improve the accuracy of range measurements pertaining to seated vehicle occupants in the passenger cabin.

14. The method of claim 12 or claim 13, wherein, during the second operational mode when no vehicle doors are open, the seat occupancy control module implements the following signal processing technique: digital beamforming to improve the accuracy of angular measurements pertaining to seated vehicle occupants in the passenger cabin.

15. The method of any one of claims 9 to 14, wherein the seat occupancy control module uses the occupant count from the first operational mode to verify the results of the second operational mode, and repeats the detecting and distinguishing steps when the occupant count is inconsistent with the results of the second operational mode.
